# EUROPÄISCHE PATENTSCHRIFT

(11) **EP 0 832 364 B1**
(45) Veröffentlichungstag und Bekanntmachung des Hinweises auf die Patenterteilung: **06.08.2003**
(21) Anmeldenummer: 96944562.6
(22) Anmeldetag: 19.09.1996
(51) Int. Cl.: F16C 1/20

(54) **EIN AUS FORMTEILEN BESTEHENDES ZUG/DRUCK-KRAFTÜBERTRAGUNGSSYSTEM**
PUSH-PULL TRANSMISSION SYSTEM MADE FROM MOULDINGS
SYSTEME DE TRANSMISSION DE FORCE DE TRACTION ET DE POUSSEE COMPOSE DE PIECES MOULEES

(30) Priorität: 19.09.1995 DE 19534643
(43) Veröffentlichungstag der Anmeldung: 01.04.1998
(73) Patentinhaber: Noetzold, Norbert, 01737 Kleinopitz (DE)
(72) Erfinder: Noetzold, Norbert, 01737 Kleinopitz (DE)
(74) Vertreter: Bartels, Martin Erich Arthur
(86) Internationale Anmeldenummer: DE9601801
(87) Internationale Veröffentlichungsnummer: WO97011283

(56) Entgegenhaltungen:
- FR-A- 358 269
- FR-A- 647 162
- FR-A- 674 990
- US-A- 1 746 719
- US-A- 1 772 453
- US-A- 5 091 141

## Beschreibung

Die Erfindung betrifft ein Seilzugsystem mit einem Zugkraft übertragenden Seil und einem Druckkraft aufnehmenden, das Seil umhüllenden Mantel.

Durch die US-A-5,091,141 ist eine Vorrichtung bekannt, mit der ein Werkzeug innerhalb eines Wärmetauschers eingeführt und positioniert werden kann. Hierfür setzt die bekannte Vorrichtung einen ausgedehnten Transmissionsstrang ein, der innerhalb einer Dampfgeneratorröhre hin und her bewegbar ist. Der dahingehende Transmissionsstrang weist mittig ein metallisches Kabel auf, einen das Kabel umfassenden flexiblen Außenmantel sowie eine Vielzahl von mit Durchbrüchen versehenen Ringformstücken, die nicht miteinander verbunden sind und die in Hintereinanderanordnung auf dem flexiblen Mantel aufgefädelt sind. Dank eines axialen Abstandes zwischen zwei einander benachbarten Formstücken sind diese auf dem Mantel bewegbar, so dass ohne größere Behinderung und ohne Aufwendung größerer Kräfte das zentral angeordnete metallische Kabel sich innerhalb des Mantels bewegen kann. Das bekannte System läßt sich abwechselnd im Zug und Druck belasten; ein Seilzugsystem mit einem Zugkraft übertragenden Seil und einem Druckkraft aufnehmenden, das Seil umhüllenden Mantel ist hierdurch jedoch nicht realisiert.

Durch die US-A-1,746,719 ist ein gattungsgemäßes Seilzugsystem bekannt, bei dem die mit einem axialen Durchbruch versehenen Formstücke unmittelbar auf einem, die Zugkraft übertragenden Drahtseil angeordnet sind und dabei stirnseitig an formkongruent gekrümmten Flächen in Reihe jeweils aneinanderliegen. Diese gleichartigen konvex-konkav ausgebildeten Formstücke bilden eine, das die Zugkraft übertragende Seil umgebende Hülle, die die Druckkraft aufnimmt, sofern die Formstücke außenumfangsseitig durch eine wendelartige Feder aneinandergehalten sind. Eine enge und spannungsfreie Kurvenlegung mit diesem bekannten Kraftübertragungssystem ist nicht möglich und aufgrund der Einwirkung der Feder kann es zu Gleit- und Betriebshemmnissen beim Betrieb der bekannten Vorrichtung kommen.

Des weiteren sind im Stand der Technik sogenannte Bowdenzüge bekannt, welche jeweils im wesentlichen aus einem gewendelt geformten Stahldrahtmantel bestehen und von einem Zugseil durchgriffen sind, welches Zugkräfte flexibel ohne Umlenkrollen, Gegenhalter und Stützen übertragen kann. Dahingehenden Bowdenzüge werden bevorzugt am Zweirad für die Bremsbetätigung oder Schaltung verwendet.

Der Nachteil dieses Bowdenzugs liegt in seiner gewendelten Stahldrahtbauart. Bei Kurvenverlegung entstehen zwei verschieden gestreckte Längen, welche mittels der fedemd gewendelten Stahldrahtbauart durch Spaltbildung am Außenradius ausgeglichen wird. Wird das Zugseil betätigt, kann sich die Gegenkraft nur am Innenradius abstützen, was den Bowdenzug in eine gestreckte Position ziehen möchte. Dieses wird verhindert, weil das Zugseil diese Zwangslage vorgibt. Die Folge ist ein hoher Reibwiderstand.

Je stärker am Zugseil gezogen wird, je größer der Reibwiderstand, je uneffektiver die Kraftübertragung, was bei Bremsvorgängen sehr nachteilig ist.

Die beim Biegen des Seilzuges einhergehende Längenveränderung ist so nachteilig, dass sich dieser Bowdenzug kaum für präzise Schaltvorgänge einer Ketten- oder Nabenschaltung eignet. Eine enge Kurvenlegung ist nicht möglich, was eine unnötige Längenzugabe des Bowdenzuges erfordert und damit höhere Kosten verursacht, optisch unvorteilhaft aussieht, lange Wege verursacht und somit kaum eine geordnete Verlegung zuläßt.

Ausgehend von dem vorstehend beschriebenen Stand der Technik liegt der Erfindung die Aufgabe zugrunde, bei dahingehenden Vorrichtungen den Reibwiderstand zu minimieren und den Einsatz dieser flexiblen Kraftübertragungsmittel zu optimieren. Des weiteren soll die Richtungsstabilität verbessert werden und es soll eine viel engere und spannungsfreie Kurvenlegung erreichbar sein, um die Berührungsfläche des Zugseiles um 75 % zu reduzieren und Gleithemmnisse zu beseitigen bei gleichzeitig verbesserter Panzerung und Abdichtung gegen äußere Einflüsse. Diese Aufgabe wird erfindungsgemäß durch die Gesamtheit der Merkmale der unabhängigen Patentansprüche 1 und 7 gelöst, wobei gemäß dem Patentanspruch 1 die Aufgabe dadurch gelöst ist, dass die Formstücke auf einem biegsamen Träger- und Führungsschlauch gefädelt sind, dessen Außenmaß dem Innenmaß des axialen Durchbruches der Formstücke entspricht. Des weiteren wird die erfindungsgemäße Aufgabenstellung gemäß dem Patentanspruch 7 dadurch gelöst, dass der Durchbruch der Formstücke an beiden Enden und axial innerhalb der gekrümmten Stirnflächen eines jeden Formstückes eine trichterförmige Erweiterung aufweist.

Vorteilhafte Ausgestaltungen des erfindungsgemäßen Seilzugsystems sind Gegenstand der Unteransprüche.

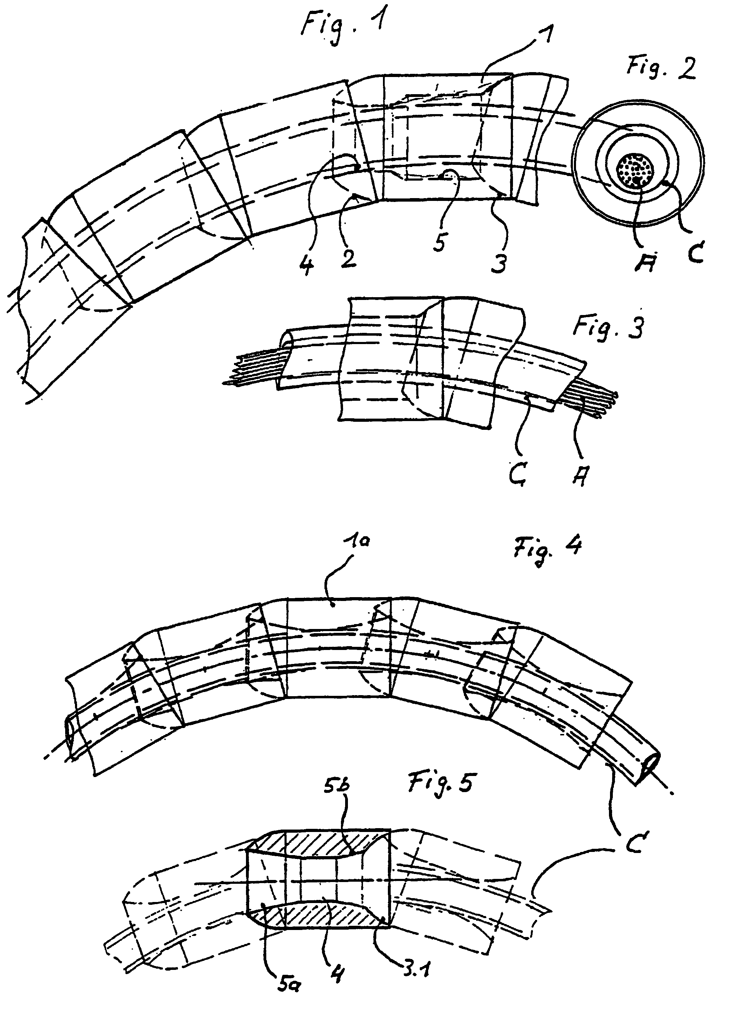

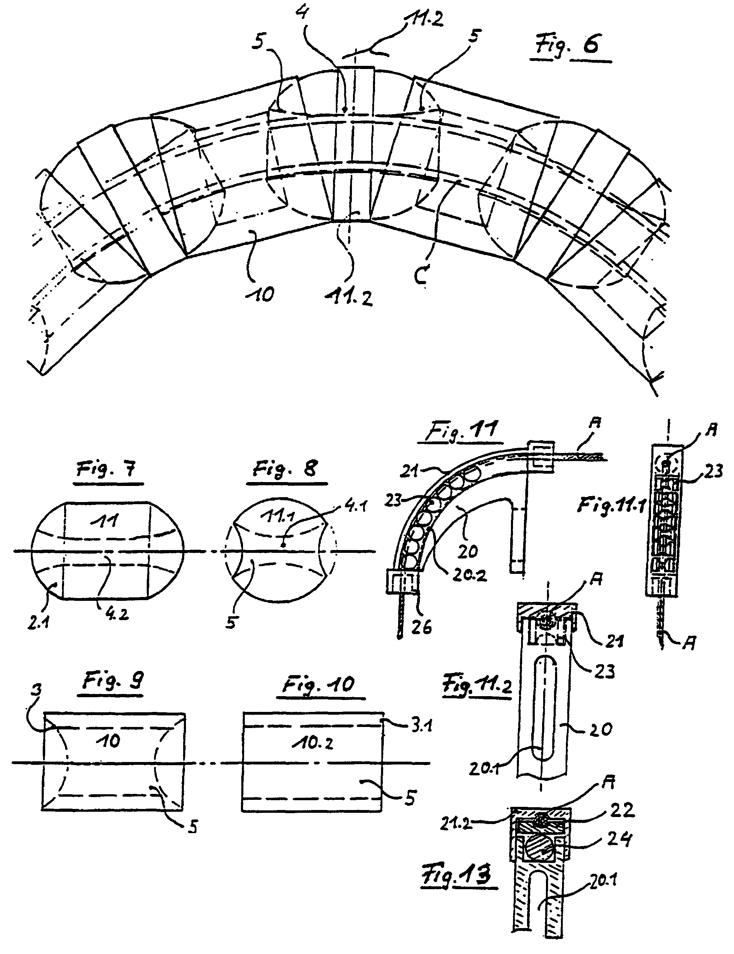

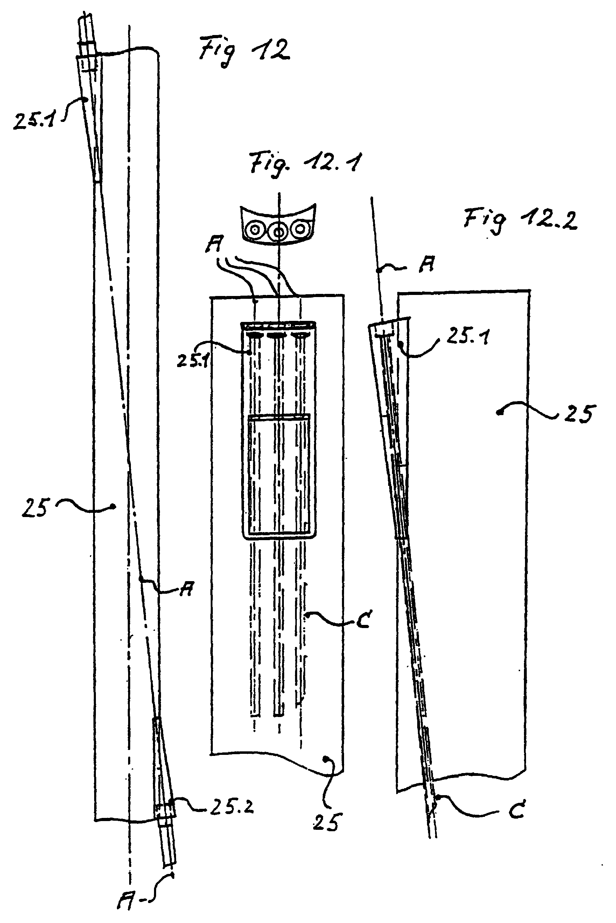

Im folgenden wird das jeweilige erfindungsgemäße Seilzugsystem anhand der Zeichnung näher erläutert.
Verschiedene Ausführungsformen des erfindungsgemäßen Seilzugsystems sind in den Fig. 1 bis 11, 11.1, 11.2 sowie 12, 12.1, 12.2 und 13 dargestellt.

Entgegen dem bekannten Bowdenzug wird bei den erfindungsgemäßen Lösungen die sonst wendelgeformte Stahldrahthülle durch aneinandergereihte Gleithülsen 1 ersetzt. Eine axial stimseitig vorhandene Stützfläche 2 weist eine konvex kugelförmige Krümmung auf, während die gegenüberliegende Fläche eine konkave kugelpfannenförmige Ausnehmung 3 aufweist, welche formkongruent zur Stützfläche 2 ist. Die aneinandergereihten Gleithülsen 1 lagern formschlüssig Fläche 2 in Fläche 3, was eine enge reibungsarme Kurvenlegung gestattet, weil die unterschiedlichen Längen durch die Kugelform kompensiert werden. Wenn das Zugseil A gezogen wird, preßt sich der Gegenhaltemantel B, welcher aus den aneinander aufgefädelten Gleithülsen 1 gebildet wird, nicht gegen das Seil A, was eine Leichtgängigkeit der Kraftübertragung zur Folge hat. Die Hülsen 1 können aus Metall, insbesondere eloxiertem Aluminium, aber auch aus Kunststoff sein, welcher vorteilhafterweise im Spritzgießverfahren zu Hülsen 1 geformt wird.

Um die Handhabung der einzelnen Hülsen zu verbessem, sind diese auf einem Schlauch aus gleitfähigem Kunststoff aufgefädelt. Dadurch wird ein zusammenhängender Strang gebildet, was handlingsfreundlich und vermarktungs-technisch vorteilhaft ist.

Eine weitere Variante der reibungsarmen Kraftumlenkung ist die teilweise Freiverlegung des Zugseiles zwischen Abstützungen, welche an Rahmenteilen befestigt sind. Bei Kraftumlenkungen (Kurvenlegung) wird das Zugseil A über anbringbare Kugel- oder Rollenführungen der Kurvensegmente 20; 25 geleitet. Dabei können zwei Bauarten eingesetzt werden; einmal die Rollenführung 23 oder die Kugelführung 24. Beide Systeme garantieren nur geringen Kraftverlust durch die minimierte Reibung.

Eine weitere Zugseilverlegung mit minimierten Reibwerten bietet sich durch die diagonal zum Rahmenrohr 25 verlegten Zugseile A. Dieses kann auch durch Nachrüstung erreicht werden, indem vom Einlaufstück 25.1 bis zum Auslaufstück 25.2 ein oder mehrere Schlauch/Schläuche (Kunststoff) angeordnet und am jeweiligen Ende durch Verkleben an den Ausläufen fixiert werden, damit das/die Seil(e) A leicht verlegbar ist/sind, um diagonal das Rohr 25 zu durchqueren und um reib- und kontaktfrei das Rohrende mittels des Auslaufstückes 25.2 wieder zu verlassen. Dabei werden keine Anlageflächen mit dem Rohr entstehen. Diese Methode hat den Vorteil, dass weder ein Geräusch verursachendes Anschlagen des/der Seile(s) A am Rahmenrohr 25 erfolgt, noch erhöhte Reibwerte auftreten können.

### Bezugszeichenschlüssel

- A: Zugseil
- B: rohrförmiger Mantel (gebildet aus den Hülsen)
- C: Kunststoffschlauch
- 1: Formstücke (Formhülse)
- 2: konvexe Fläche
- 3: konkave Fläche

- 4: Durchgangsbohrung
- 5: Ausnehmung - Freiraum
- 10: Hülse mit konkaver Anlagefläche und zyl. Bohrung
- 10.1: Hülse mit zylindrischer Ausnehmung und geraden Stirnflächen

- 11: Formstück mit zwei konvexen Anlageflächen
- 11.1: kugelförmiges Formstück
- 11.2: Formstück mit zylindrischen Bund
- 20: Kurvensegment
- 20.1: Befestigungsmöglichkeit
- 20.2: gekrümmte Fläche
- 20.3: Gegenhalter (Seilzugaufnahme)
- 21: Profilkappe
- 21.1: Befestigungsmöglichkeit
- 21.2: Abdeckkappe
- 22: Gleit.-und Auflagering
- 23: Profilrollen
- 24: Kugel (Rollkörper)
- 24.1: Lauffläche

- 25: Rahmen-Rohr
- 25.1: Seileinführung
- 25.2: Seilausführung

## Patentansprüche

1. Seilzugsystem mit einem Zugkraft übertragenden Seil (A) und einem Druckkraft aufnehmenden, das Seil (A) umhüllenden Mantel (B), welcher aus aneinandergereihten rohrförmigen Formstücken (1;10;10.2; 11.2) besteht, welche mit einem axialen Durchbruch (4) versehen sind, wobei die Formstücke stirnseitig an formkongruent gekrümmten Flächen (2,3) anliegen wodurch der Mantel (B) bogenförmig verlegbar ist und wobei die Formstücke (1;10;10.2;11.2) auf einen biegsamen Träger- und Führungsschlauch (C) gefädelt sind, dessen Außenmaß dem Innenmaß des axialen Durchbruchs (4) der Formstücke (1;10;10.2;11.2) entspricht.

2. Seilzugsystem nach Anspruch 1, **dadurch gekennzeichnet, dass** die Formstücke (1;10;10.2;11.2) zentrisch einen Durchbruch (4) haben, welcher mindestens so groß ist, dass der Träger- und Führungsschlauch (Q hindurchgeschoben werden kann, während weitere, im Querschnitt größere Ausnehmungen (5;5a) als Freiräume dienen.

3. Seilzugsystem nach Anspruch 1 oder 2, **dadurch gekennzeichnet, dass** gleichartige Formstücke (1) mit jeweils einer konvexen und einer konkaven Stirnfläche aneinandergereiht werden.

4. Seilzugsystem nach Anspruch 1 oder 2, **dadurch gekennzeichnet, dass** erste Formstücke (11.2) mit beidseitig konvexen Stirnflächen abwechselnd an zweite Formstücke (10; 10.2) mit beidseitig konkaven oder ringförmigen Stirnflächen gereiht werden.

5. Seilzugsystem nach Anspruch 4, **dadurch gekennzeichnet, dass** die Durchbrüche der ersten Formstücke (11.2) mit beidseitig konvexen Stirnflächen ein Innenmaß aufweisen, das dem Außenmaß des Träger- und Führungsschlauches (C) entspricht, während die Durchbrüche der zweiten Formstücke (10; 10.2) mit beidseitig konkaven oder ringförmigen Stimflächen ein größeres Innenmaß besitzen.

6. Seilzugsystem nach einem der Ansprüche 1 bis 5, **dadurch gekennzeichnet, dass** der Träger- und Führungsschlauch (C) aus Kunststoff besteht.

7. Seilzugsystem mit einem Zugkraft übertragenden Seil (A) und einem Druckkraft aufnehmenden, das Seil (A) umhüllenden Mantel (B), welcher aus stirnseitig aneinandergereihten Formstücken (1;10;10.2; 11.2) besteht, die im wesentlichen einen zylindrischen Außendurchmesser und einen axialen Durchbruch (4) haben, wobei der axiale Durchbruch (4) der Formstücke unterschiedliche Innenmaße (4;5;5a) aufweist und diese Formstücke stimseitig an formkongruent gekrümmten Flächen (2 zu 3) anliegen, wodurch der Mantel (B) bogenförmig verlegbar ist und wobei der Durchbruch (4) an beiden Enden und axial innerhalb der gekrümmten Stirnflächen eines jeden Formstückes (1;10;10.2;11.2) eine trichterförmige Erweiterung aufweist.

8. Seilzugsystem nach einem der Ansprüche 1 bis 7, **dadurch gekennzeichnet, dass** die Formstücke (1;10;10.2;11.2) aus einem gleitfähigen Kunststoff oder aus Keramik hergestellt sind.

9. Seilzugsystem nach einem der Ansprüche 1 bis 8, **dadurch gekennzeichnet, dass** der Mantel (B) gebildet aus den Formstücken (1; 10;10.2;11.2) mit einer Schlauchhülle (B1) überzogen ist.

10. Verwendung des Seilzugsystems nach einem der Ansprüche 1 bis 9, **dadurch gekennzeichnet, dass** das Seil (A) nicht frei über Rahmenrohre (25) geleitet wird, sondern diagonal durch das Rahmenrohr mittels anbringbarer Seileinführungs- und Seilausführungsstellen (25.1;25.2) geführt wird.

## Claims

1. Cable control system having a cable (A) which transfers tensile force and a sheath (B) which takes up pressing force and which covers the cable (A), the sheath (B) comprising tubular shaped pieces (1;10;10.2;11.2) which are positioned beside each other and which are provided with an axial opening (4), the end faces of the shaped pieces adjoining faces (2,3) which are curved so as to be congruent in terms of shape, whereby the sheath (B) can be moved in an arcuate manner, and the shaped pieces (1;10;10.2;11.2) being threaded onto a flexible carrying and guiding tube (C) whose external dimension corresponds to the internal dimension of the axial opening (4) of the shaped pieces (1;10;10.2;11.2).

2. Cable control system according to claim 1, **characterised in that** the shaped pieces (1;10;10.2;11.2) have, at their centre, an opening (4) which is at least large enough to allow the carrying and guiding tube (C) to be pushed through, whilst further recesses (5;5a), which are larger in cross-section, serve as empty spaces.

3. Cable control system according to claim 1 or claim 2, **characterised in that** identical shaped pieces (1), each having a convex end face and a concave end face, are positioned beside each other.

4. Cable control system according to claim 1 or claim 2, **characterised in that** first shaped pieces (11.2) having convex end faces at both ends are positioned alternately beside second shaped pieces (10;10.2) having concave or annular end faces at both ends.

5. Cable control system according to claim 4, **characterised in that** the openings of the first shaped pieces (11.2) having convex end faces at both ends have an internal dimension which corresponds to the external dimension of the carrying and guiding tube (C), whilst the openings of the second shaped pieces (10;10.2) having concave or annular end faces at both ends have a larger internal dimension.

6. Cable control system according to any one of claims 1 to 5, **characterised in that** the carrying and guiding tube (C) is of plastics material.

7. Cable control system having a cable (A) which transfers tensile force and a sheath (B) which takes up pressing force and which covers the cable (A), the sheath (B) comprising shaped pieces (1;10;10.2;11.2) which adjoin each other at the end faces and which substantially have a cylindrical external diameter and an axial opening (4), the axial opening (4) of the shaped pieces having different internal dimensions (4;5;5a) and the end faces of these shaped pieces adjoining faces (2 to 3), which are curved so as to be congruent in terms of shape, whereby the sheath (B) can be moved in an arcuate manner, and the opening (4) having a funnel-shaped widening at both ends and axially within the curved end faces of each shaped piece (1;10;10.2;11.2).

8. Cable control system according to any one of claims 1 to 7, **characterised in that** the shaped pieces (1;10;10.2;11.2) are produced from a low-friction plastics material or from ceramics material.

9. Cable control system according to any one of claims 1 to 8, **characterised in that** the sheath (B), which is formed from the shaped pieces (1;10;10.2;11.2), is covered with a flexible tube coating (B1).

10. Application of the cable control system according to any one of claims 1 to 9, **characterised in that** the cable (A) is not directed freely by way of frame tubes (25), but is instead guided diagonally through the frame tube by means of attachable cable inlet and cable outlet points (25.1;25.2).

## Revendications

1. Système de commande par câble (A) avec un câble transmettant une force de traction et une gaine (B) entourant le câble (A) qui absorbe la force de pression, lequel se compose de pièces façonnées tubulaires (1 ; 10 ; 10.2 ; 11.2) alignées ensemble et pourvues d'un passage (4) axial, moyennant quoi les pièces façonnées reposent du côté frontal contre des surfaces (2, 3) voûtées congruentes de part la forme, moyennant quoi la gaine (B) peut être posée en forme d'arche et moyennant quoi les pièces façonnées (1 ; 10 ; 10.2 ; 11.2) sont enfilées sur un tuyau flexible (C) de support et de guidage dont la dimension d'encombrement correspond à la dimension intérieure du passage (4) axial des pièces façonnées (1 ; 10 ; 10.2 ; 11.2).

2. Système de commande par câble selon la revendication 1, **caractérisé en ce que** les pièces façonnées (1 ; 10 ; 10.2 ; 11.2) possèdent un passage (4) au centre qui est de taille au moins suffisante pour permettre d'y faire passer à travers le tuyau flexible (C) de support et de guidage, alors que d'autres évidements (5 ; 5a) à section transversale plus grande servent de zones de dégagement.

3. Système de commande par câble selon les revendications 1 ou 2, **caractérisé en ce que** des pièces façonnées (1) du même genre avec respectivement une surface frontale convexe et concave sont alignées ensemble.

4. Système de commande par câble selon les revendications 1 ou 2, **caractérisé en ce que** des premières pièces façonnées (11.2) avec des surfaces frontales convexes des deux côtés sont alignées à tour de rôle avec des deuxièmes pièces façonnées (10 ; 10.2) avec des surfaces frontales concaves ou annulaires des deux côtés.

5. Système de commande par câble selon la revendication 4, **caractérisé en ce que** les passages des premières pièces façonnées (11.2) avec des surfaces frontales convexes des deux côtés présentent une dimension intérieure qui correspond à la dimension d'encombrement du tuyau flexible (C) de support et de guidage, alors que les passages des deuxièmes pièces façonnées (10 ; 10.2) avec des surfaces frontales concaves ou annulaires des deux côtés possèdent une dimension intérieure supérieure.

6. Système de commande par câble selon l'une quelconque des revendications 1 à 5, **caractérisé en ce que** le tuyau flexible (C) de support et de guidage est en matière plastique.

7. Système de commande par câble avec un câble transmettant une force de traction et une gaine (B) entourant le câble (A) qui absorbe la force de pression, laquelle se compose de pièces façonnées (1 ; 10 ; 10.2 ; 11.2) alignées ensemble du côté frontal et qui présentent un diamètre extérieure essentiellement cylindrique et un passage (4) axial, moyennant quoi le passage (4) axial des pièces façonnées présente des dimensions intérieures (4 ; 5 ; 5a) différentes et ces pièces façonnées reposent du côté frontal contre des surfaces (2 à 3) voûtées congruentes de part la forme, moyennant quoi la gaine (B) peut être posée en forme d'arche et moyennant quoi le passage (4) présente aux deux extrémités, et axialement à l'intérieur de la surface frontale voûtée de chaque pièce façonnée (1 ; 10 ; 10.2 ; 11.2), un élargissement en forme d'entonnoir.

8. Système de commande par câble selon l'une quelconque des revendications 1 à 7, **caractérisé en ce que** les pièces façonnées (1 ; 10 ; 10.2 ; 11.2) sont fabriquées en matière plastique glissante ou en céramique.

9. Système de commande par câble selon l'une quelconque des revendications 1 à 8, **caractérisé en ce que** la gaine (B) formée par les pièces façonnées (1 ; 10 ; 10.2 ; 11.2) est recouverte avec une gaine de tuyau (B1).

10. Utilisation du système de commande par câble selon l'une quelconque des revendications 1 à 9, **caractérisée en ce que** le câble (A) n'est pas conduit librement via des tubes pour cadre (25), mais diagonalement à travers le tube pour cadre à l'aide d'emplacements apposables d'introduction du câble et de sortie du câble (25.1 ; 25.2).
